**Europäisches Patentamt**

**European Patent Office**

**Office européen des brevets**

(11) Veröffentlichungsnummer: **0 257 221**
**B1**

(12) # EUROPÄISCHE PATENTSCHRIFT

(45) Veröffentlichungstag der Patentschrift:
28.11.90

(21) Anmeldenummer: **87108748.2**

(22) Anmeldetag: **19.06.87**

(51) Int. Cl.⁵: **B29B 7/76**

(54) Mischkopf zum Herstellen eines chemisch reagierenden Gemisches.

(30) Priorität: **27.08.86 DE 3629042**

(43) Veröffentlichungstag der Anmeldung:
**02.03.88 Patentblatt 88/9**

(45) Bekanntmachung des Hinweises auf die Patenterteilung:
**28.11.90 Patentblatt 90/48**

(84) Benannte Vertragsstaaten:
**AT BE CH ES FR GB GR IT LI LU NL SE**

(56) Entgegenhaltungen:
**EP-A- 0 025 094**
**EP-A- 0 080 698**
**US-A- 3 189 325**

(73) Patentinhaber: **Klöckner Ferromatik Desma GmbH, Riegeler Strasse 4, D-7831 Malterdingen(DE)**

(72) Erfinder: **Pontius, Klaus, Dipl.-Ing, Schulstrasse 88, D-5508 Hermeskeil(DE)**
Erfinder: **Settinger, Manfred, Dipl.-Ing., Weinbergstrasse 23, D-5511 Ockten(DE)**

(74) Vertreter: **Kiefer, Winfried, Dipl.-Phys., Klöckner-Werke Aktiengesellschaft Patentabteilung Klöcknerstrasse 29, D-4100 Duisburg 1(DE)**

## Beschreibung

Die Erfindung betrifft einen Mischkopf zum Herstellen eines chemisch reagierenden Gemisches aus mindestens zwei Komponenten, insbesondere eines zu Polyurethan ausreagierenden Gemisches aus Isocyanat und Polyol, der eine Bohrung mit einem verschiebbaren Stößel und unter Bildung einer Mischkammer in der Wandung der Bohrung zwei Düsen zum Zuführen der Komponenten aufweist, wobei der Stößel das hergestellte Gemisch aus der Bohrung fördert.

Mischköpfe dieser Art zum Herstellen von Formkörpern aus Polyurethan sind bereits bekannt (DBP 20 65 841).

Diese Mischköpfe weisen eine Bohrung mit einer offenen Stirnseite auf, die die Austrittsöffnung für das Gemisch bildet, an die sich der Hohlraum einer Form zum Herstellen der Formkörper aus Polyurethan anschließt.

In etwa im mittleren Bereich der Bohrung sind in ihrer Wandung einander gegenüber zwei Düsen angeordnet, über die Isocyanat und Polyol in die Bohrung injiziert werden und zur Vermischung aufeinander prallen. Dieser Bereich der Bohrung wird allgemein als Mischkammer bezeichnet.

Da der Stößel im Idealfall das Gemisch vollständig aus der Bohrung fördert, wird er auch als Reinigungsstößel bezeichnet. Er befindet sich während des Mischens der Komponenten in einer Stellung oberhalb der beiden Düsen.

Zur besseren Durchmischung ist es weiterhin bekannt (US-A 3 185 325) den Stößel rotieren zu lassen, der zu diesem Zweck in Richtung zur Mischkammer schaufelartige Ausnehmungen hat.

Das ausreagierende Polyurethan weist sehr hohe Klebekräfte auf, so daß stets vorhandene Gemischreste am Reinigungsstößel dazu führen, daß sehr hohe Hydraulikdrücke erforderlich sind, um ihn axial zu verschieben. Der Reinigungsstößel bzw. Stößel ist somit ein hochbeanspruchtes Teil, das oftmals zu Bruch geht.

Der Erfindung liegt die Aufgabe zugrunde, einen Mischkopf der eingangs erwähnten Art derart auszubilden, daß diese an dem Reinigungsstößel auftretenden Klebekräfte im wesentlichen vermieden werden.

Diese Aufgabe wird gemäß einem ersten Lösungsprinzip dadurch gelöst, daß der axial verschiebbare Stößel einen zylindrischen Querschnitt hat und mit einem um seine Achse oszillierenden Antrieb gekoppelt ist. Durch diese Maßnahmen wird ein Verkleben vermieden.

Durch diese Maßnahmen wird erreicht, daß der axial verschiebbare Stößel eine oszillierende Bewegung während des Mischens und des Reinigens vollführt, d.h., daß während der gesamten Betriebszeit des Mischkopfes der oszillierende Antrieb eingeschaltet ist. Durch die dauernde Oszillation des Stößels wird erreicht, daß der sich bildende Film des zu Polyurethan ausreagierenden Gemisches zwischen dem Stößel und der Wandung nicht zu einer Verklebung des Stößels mit der Wandung der Bohrung bzw. Mischkammer führt.

Diese Aufgabe wird gemäß einem zweiten Lösungsprinzip dadurch gelöst, daß der Stößel einen prismatischen Querschnitt hat und mit einem in axialer Richtung des Stößels oszillierenden Antrieb gekoppelt ist. Unter prismatischem Querschnitt ist im Rahmen der Erfindung ein Querschnitt zu verstehen, der von dem zylindrischen Querschnitt des Stößels beispielsweise in der Weise abweicht, daß Stößel und Mischkammer eine Abflachung aufweisen. Entsprechend komplementär ist die ihn führende Bohrung ausgebildet. Der Stößel kann auch einen elliptischen Querschnitt bzw. einen quadratischen Querschnitt usw. aufweisen. Da eine Bewegung um seine Achse in der Bohrung aufgrund seines prismatischen Querschnittes nicht mehr möglich ist, erfolgt in Abwandlung der beiden ersten Lösungen eine oszillierende Bewegung des Stößels während der gesamten Betriebszeit des Mischkopfes.

Selbstverständlich kann der Querschnitt ein runder Querschnitt sein.

Die Erfindung ist in der Zeichnung anhand von Ausführungsbeispielen erläutert:

Fig. 1a, b, c zeigt schematisch ein Ausführungsbeispiel des ersten Lösungsprinzips, wobei der Mischkopf im Schnitt dargestellt ist,

Fig. 2 zeigt schematisch ein Ausführungsbeispiel des zweiten Lösungsprinzips in der Darstellung der Fig. 1.

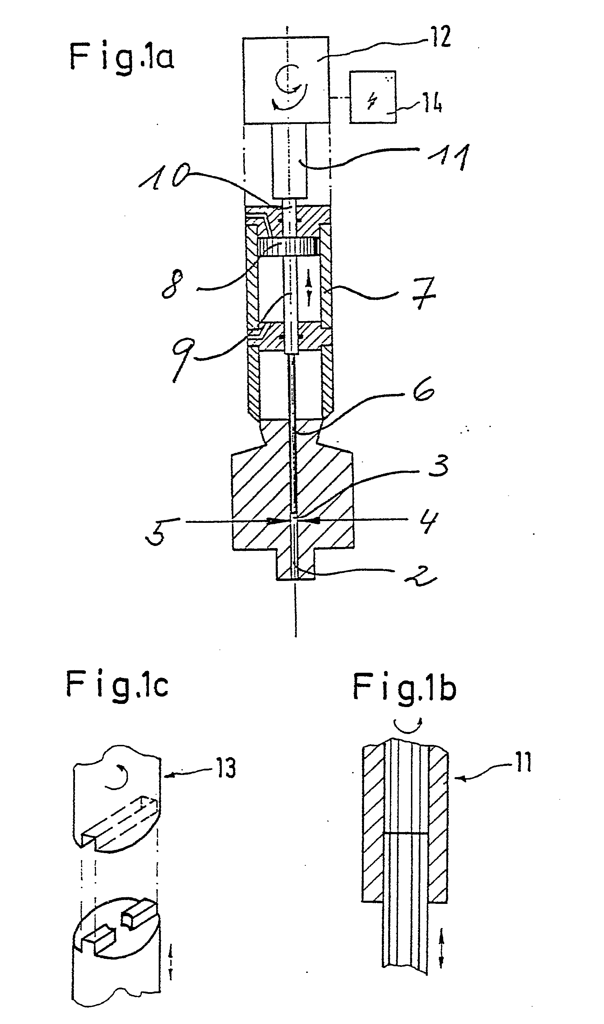

In den Figuren sind mit gleichen Bezugszeichen gleiche Teile bezeichnet. Mit 1 ist der Mischkopf bezeichnet, mit 2 bzw. 3 die axiale Bohrung bzw. die Mischkammer, mit 4 und 5 die Düsen für das Polyol bzw. Isocyanat, und mit 6 der Reinigungsstößel. Mit 7 ist der Reinigungszylinder bezeichnet, der einen beidseitig hydraulisch bzw. pneumatisch beaufschlagbaren Kolben 8 aufweist, dessen eine Kolbenstange mit dem Reinigungsstößel verbunden ist und dessen andere Kolbenstange 9 in allen Stellungen aus dem Reinigungszylinder ragt und über eine Zahnkupplung 11 mit einem Rotationsantrieb 12 gekuppelt ist. Die Zahnkupplung ist in Fig. 1b vergrößert dargestellt.

Der Rotationsantrieb 12 ändert mittels einer an sich bekannten Steuereinrichtung laufend seine Drehrichtung.

Aufgrund der Zahnkupplung ist während der gesamten Betriebszeit des Mischkopfes der Reinigungsstößel in Oszillation.

In Fig. 1c ist eine weitere einrastbare Kupplung 13 dargestellt (im Ausschnitt). Beim Hochfahren des Reinigungsstößels durch entsprechendes Beaufschlagen des Reinigungszylinders rastet die Kupplung ein, so daß der Reinigungsstößel oszilliert.

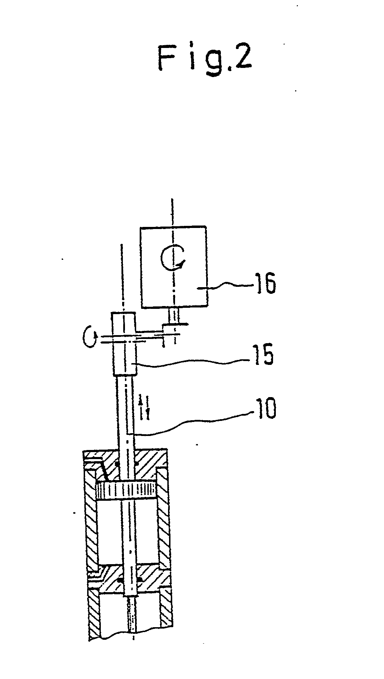

In Figur 2 steht die Kolbenstange 10 in ihrer oberen Endstellung gegen die Exzenterscheibe 15 an, die von dem Motor 16 angetrieben wird. In dieser oberen Endstellung führt der Reinigungsstößel oszillierende Bewegungen in axialer Richtung aus.

Durch diese erfindungsgemäßen Maßnahmen wird vor allem erreicht, daß einerseits zum axialen Verschieben des Reinigungsstößels die bisher erforderlichen hohen hydraulischen Drücke vermieden werden können, wobei es im allgemeinen genügt, den Reinigungsstößel pneumatisch in axialer Richtung zu verschieben.

Es ist weiterhin nicht mehr erforderlich, den Reinigungsstößel entsprechend diesen bisher hohen Belastungen auszulegen, d.h. sein Durchmesser kann erheblich geringer gewählt werden als bisher. Dies hat erhebliche Vorteile auch bezüglich der Qualität des ausreagierenden Gemisches, da allgemein die Forderung besteht, daß die Düsen, die der Mischkammer die Komponenten zuführen, einen möglichst geringen Abstand haben sollten.

## Patentansprüche

1. Mischkopf (1) zum Herstellen eines chemisch reagierenden Gemisches aus mindestens zwei Komponenten, insbesondere eines zu Polyurethan ausreagierenden Gemisches aus Isocyanat und Polyol, der eine Bohrung mit einem axial verschiebbaren Stößel (6) und in der Wandung der Bohrung zur Bildung einer Mischkammer (3) zwei Düsen (5 bzw. 4) zum Zuführen der Komponenten aufweist, wobei der Stößel das hergestellte Gemisch aus der Bohrung fördert, dadurch gekennzeichnet, daß der axial verschiebbare Stößel (6) einen zylindrischen Querschnitt hat und mit einem um seine Achse oszillierenden Antrieb (15, 16) gekoppelt ist.

2. Mischkopf (1) zum Herstellen eines chemisch reagierenden Gemisches aus mindestens zwei Komponenten, insbesondere eines zu Polyurethan ausreagierenden Gemisches aus Isocyanat und Polyol, der eine Bohrung mit einem axial verschiebbaren Stößel (6) und in der Wandung der Bohrung zur Bildung einer Mischkammer (3) zwei Düsen (5 bzw. 6) zum Zuführen der Komponenten aufweist, wobei der Stößel das hergestellte Gemisch aus der Bohrung fördert, dadurch gekennzeichnet, daß der axial verschiebbare Stößel (6) einen prismatischen Querschnitt hat und mit einem in axialer Richtung des Stößels oszillierenden Antrieb (15, 16) gekoppelt ist.

## Claims

1. Mixing head (1) for producing a chemically reactive mixture from at least two components, in particular a mixture of isocyanate and polyol reacting to form polyurethane, which comprises a bore with an axially displaceable plunger (6) and two nozzles (5, 4) for supplying the components, in the wall of the bore in order to form a mixing chamber (3), the plunger conveying the mixture produced from the bore, characterised in that the axially displaceable plunger (6) has a cylindrical cross-section and is connected to a drive (15, 16) oscillating about its axis.

2. Mixing head (1) for producing a chemically reactive mixture from at least two components, in particular a mixture of isocyanate and polyol reacting to form polyurethane, which comprises a bore with an axially displaceable plunger (6) and two nozzles (5, 6) for supplying the components, in the wall of the bore in order to form a mixing chamber (3), the plunger conveying the mixture produced from the bore, characterised in that the axially displaceable plunger (6) has a prismatic cross-section and is connected to a drive (15, 16) oscillating in the axial direction of the plunger.

## Revendications

1. Tête de mélange (1) pour la fabrication d'un mélange chimiquement réactif d'au moins deux composants, en particulier d'un mélange d'isocyanate et de polyol se transformant par réaction en polyuréthane, qui comprend un alésage avec un poussoir (6) déplaçable dans le sens axial et dans la paroi de l'alésage, pour la formation d'une chambre de mélange (3), deux tuyères (5 et respectivement 4) pour l'amenée des composants, le poussoir évacuant de l'alésage le mélange réalisé, caractérisée en ce que le poussoir (6) déplaçable dans le sens axial présente une section transversale cylindrique et est couplé avec un système d'entraînement (15, 16) qui oscille autour de son axe.

2. Tête de mélange (1) pour la fabrication d'un mélange chimiquement réactif d'au moins deux composants, en particulier d'un mélange d'isocyanate et de polyol se transformant par réaction en polyuréthane, qui comprend un alésage avec un poussoir (6) déplaçable dans le sens axial et dans la paroi de l'alésage, pour la formation d'une chambre de mélange (3), deux tuyères (5 et respectivement 4) pour l'amenée des composants, le poussoir évacuant de l'alésage le mélange réalisé, caractérisée en ce que le poussoir (6) déplaçable dans le sens axial présente une section transversale prismatique et est couplé avec un système d'entraînement (15, 16) qui oscille autour dans le sens axial du poussoir.

Fig.1a

Fig.1c

Fig.1b

# Fig.2